# EUROPÄISCHE PATENTANMELDUNG

(11) **EP 1 829 935 A1**
(43) Veröffentlichungstag der Anmeldung: **05.09.2007**
(21) Anmeldenummer: 07003974.8
(22) Anmeldetag: 27.02.2007
(51) Int. Cl.: C09D 5/00, C09D 5/03, C09D 5/36, C09D 7/12

(54) **Samteffekt erzeugendes Beschichtungsmittel**

(30) Priorität: 02.03.2006 DE 102006010226
(71) Anmelder: J.W. Ostendorf GmbH & Co. KG., 48653 Coesfeld (DE)
(72) Erfinder: Ostendorf, Michael, 48653 Coesfeld (DE)
(74) Vertreter: Stenger, Watzke & Ring

(57) **Zusammenfassung**

Die vorliegende Erfindung betrifft ein einen Samteffekt erzeugendes Beschichtungsmittel. Insbesondere betrifft die vorliegende Erfindung ein Beschichtungsmittel auf Wasserbasis, wie beispielsweise ein Anstrichmittel, welches eine wechselweise mattglänzend erscheinende Oberfläche auf einem mit dem Beschichtungsmittel beschichtetem Substrat hervorruft. Das erfindungsgemäße Beschichtungsmittel ist aus einer bindemittelhaltigen Base und einem Effektmittel herstellbar, wobei das Effektmittel Cellulosefasern und Effektpigmente, insbesondere Perlglanzpigmente, aufweist.

## Beschreibung

Die vorliegende Erfindung betrifft ein einen Samteffekt erzeugendes Beschichtungsmittel. Insbesondere betrifft die vorliegende Erfindung ein Beschichtungsmittel auf Wasserbasis, wie beispielsweise ein Anstrichmittel, welches eine wechselweise mattglänzend erscheinende Oberfläche auf einem mit dem Beschichtungsmittel beschichteten Substrat hervorruft. Hierdurch wird den Oberflächen ein Aussehen verliehen, dessen Gesamteindruck an antike Techniken wie Stucco Antico, Stucco Venziano oder Spatula Stuhhi erinnert.

Beschichtungs- oder Anstrichmittel dienen zur Erzeugung von Oberflächenschutzbeschichtungen auf Trägersubstraten zu sowohl funktionalen als auch dekorativen Zwecken. So sind aus dem Stand der Technik unterschiedlichste Beschichtungs-, Farb- oder Lackzusammensetzungen für unterschiedlichste zu beschichtende Oberflächen bekannt. Hierbei beruht die Auswahl des eingesetzten Beschichtungs- oder Anstrichmittels zum einen auf dem zu beschichtenden oder mit einem Anstrich zu versehenden Material, als auch auf dem zu erzeugenden Effekt. Insbesondere bei der Gestaltung von Dekorationsgegenständen als auch bei Wandanstrichen für den Innen- und Außenbereich bilden die mit den Anstrichen oder Beschichtungen erzeugten Effekte eine wesentliche Entscheidungsgrundlage für die Auswahl eines Beschichtungs- oder Anstrichmittels.

Im Bereich der Wandfarben besteht eine große Nachfrage der Konsumenten nach neuen Farbeffekten für die dekorative Gestaltung von Innenräumen und Gebäuden.

Ein Trend im Bereich der Wandgestaltung ist die dekorative Beschichtung von Wandflächen mit einem einen Antikeffekt erzeugenden Beschichtungsmittel. So ist beispielsweise aus dem italienischen Patent IT 1323033 ein Beschichtungsmittel bekannt, welches auf den mit den entsprechenden Beschichtungsmitteln versehenen Oberflächen einen einem Damaststoff ähnlichen Antikeffekt erzeugt. Das hier eingesetzte Beschichtungsmittel auf Wasserbasis weist zur Effekterzeugung Talkumpulver, ein Perlpigment sowie Vinylversatatharz auf. Die so zu erzeugenden Oberflächen sind jedoch nachteiligerweise äußerst empfindlich und bedürfen einer speziellen Untergrundvorbehandlung. Darüber hinaus ist die Verarbeitung aufwendig und läßt sich in der Regel nur durch versierte Fachbetriebe bewerkstelligen.

Ausgehend von diesem Stand der Technik ist es **Aufgabe** der vorliegenden Erfindung ein Beschichtungs- oder Anstrichmittel zur Verfügung zu stellen, welches bei einfacher Verarbeitung einen gewünschten samtartigen Effekt mit einer unempfindlichen Oberfläche erzeugt.

**Gelöst** wird diese Aufgabe durch ein Beschichtungsmittel, insbesondere Anstrichmittel, welches wenigstens ein Effektpigment und Cellulosefasern aufweist.

Die erfindungsgemäßen Beschichtungs- oder Anstrichmittel bestehen aus einer wäßrigen bindemittelhaltigen Base und einem Effektmittel. Das Effektmittel weist ein Effektpigment, insbesondere ein Perlglanzpigment auf.

Ein geeignetes Pigment ist beispielsweise Aluminium. Darüber hinaus können auch Silberweiße- oder Goldtonperlglanzpigmente oder auch Interferenzpigmente als Effektpigment eingesetzt werden. Durch Mischung unterschiedlicher Perlglanz- und/oder Interferenzpigmente können zusätzliche Farbtonwechsel in der Oberfläche hervorgerufen werden. Das Beschichtungs- oder Anstrichmittel weist vorteilhafterweise das Effektpigment in einer Konzentration im Bereich zwischen ungefähr 2 bis ungefähr 20 Gew.-%, bevorzugt im Bereich zwischen ungefähr 8 bis ungefähr 15 Gew.-% auf.

Darüber hinaus weist das Effektmittel Cellulosefasern auf. Die erfindungsgemäß einzusetzenden Cellulosefasern haben vorteilhafterweise eine mittlere Faserlänge im Bereich von ca. 30 µm. Der Durchmesser der erfindungsgemäß einsetzbaren Celluslosfasern beträgt in einer vorteilhaften Ausführung ca. 18 µm. Die Cellulosefasern sind im erfindungsgemäßen Beschichtungs- oder Anstrichmittel mit einer Menge im Bereich zwischen ungefähr 2 bis 35 Gew.-% bevorzugt im Bereich zwischen ungefähr 2 und ungefähr 10 Gew.-%, noch bevorzugter in einem Bereich zwischen ungefähr 4 Gew.-% und ungefähr 8 Gew.-% enthalten. Vorteilhafterweise werden gebleichte, hochreine Celluslosefasern mit einem Reinheitsgrad von ca. 99,5% eingesetzt. Durch den hohen Anteil an Cellulosefasern in dem erfindungsgemäßen Beschichtungs- oder Anstrichmittel kommt es zu einer Art Mikroverfilzung und einer intensiven Ausrichtung der Pigmente.

Alternativ zu Cellulosefasern können mattierende Füllstoffe wie Talk, Kaolin, Schwerspat, Calciumcarbonat, Plastorit, Glimmer, Feldspat oder Cristobalit etc. in den erfindungsgemäßen Beschichtungs- oder Anstrichmitteln eingesetzt werden. Eine weitere Alternaitve zu Cellulosefasern bilden Microspheres, Glashohlkugeln, keramische Füllstoffe wie Poraver oder Circosil sowie Aerosile, Fällungskieselsäure und Diatomeenerde. In Ausgestalltungen des erfindungsgemäßen Beschichtungs- und Anstrichmittels können Celluslosfasern zumindest teilweise durch ein oder mehrere der zuvor genannten Stoffe ersetzt werden.

Zur Verbesserung der Widerstandsfähigkeit der Oberfläche enthält das erfindungsgemäße Beschichtungs- oder Anstrichmittel wenigstens ein Wachs. Vorteilhafterweise weist das erfindungsgemäße Beschichtungs- oder Anstrichmittel ein nichtionogenes Polyethylenwachs mit einer Dichte im Bereich von ca. 1 g/cm³ und einer Viskosität < 300 mPa*s auf. Das in den erfindungsgemäßen Beschichtungs- oder Anstrichmitteln enthaltene Wachs besitzt einen pH-Wert im Bereich von ca. 8,0 bis 10,0 und ist mit Wasser verdünnbar. Alternativ können auch andere synthetische oder natürliche Hartwachse, Fischer-Tropsch-Wachse und Amidwachse sowie Bienenwachs oder Carnaubawachs oder auch wässrige Dispersionen oder Suspensionen von Hartwachsen in den erfindungsgemäßen Beschichtungs- oder Anstrichmitteln eingesetzt werden. In Ausgestaltungen der Erfindung ist auch die Verwendung von Mischungen der zuvor genannten Wachse möglich.

Die zur Herstellung des erfindungsgemäßen Beschichtungs- oder Anstrichmittels eingesetzte Base weist als Bindemittel vorteilhafterweise ein Polyvinylacetat auf. Das Bindemittel kann im Beschichtungs- oder Anstrichmittel in einer Konzentration im Bereich von ungefähr 23,0 bis ungefähr 37,0 Gew.-%, bevorzugt im Bereich zwischen ungefähr 25,0 und ungefähr 32,0 Gew.-% enthalten sein. Alternativ können als Bindemittel Dispersionen und redispergierbare verbindungen auf Basis von Polyvinylacetat Verbindungen (PVAC) wie beispielsweise PVAC-Versatat, PVAC-Maleat, PVAC-Acrylat, PVAC-Versatat-Acrylat oder Styrol-Butadien in den erfindungsgemäßen Beschichtungs- oder Anstrichmitteln eingesetzt weren. Weitere geeignete Bindemittel sind feinteiligere Styrolacrylate und Reinacrylate. Darüber hinaus können auch Mischungen der zuvor genannten Bindemittel in den erfindungsgemäßen Beschichtungs- oder Anstrichmitteln eingesetzt werden.

Darüber hinaus weist das erfindungsgemäße Beschichtungs- oder Anstrichmittel typische Hilfsstoffe wie Netzmittel, Verdicker, Entschäumer oder Alkalisierungsmittel auf. Neben den bereits beschriebenen Effektpigmenten kann das erfindungsgemäße Beschichtungs- oder Anstrichmittel weitere Farbpigmente aufweisen.

Das erfindungsgemäße Beschichtungs- oder Anstrichmittel kann die in der nachfolgenden Tabelle aufgeführten Bestandteile in den angegebenen Bereichen aufweisen.

**Tabelle 1**

| | | | |
|---|---|---|---|
| 33,0 | bis | 50,0 | Wasser |
| 0,4 | bis | 0,6 | Netzmittel |
| 0,7 | bis | 1,1 | Verdicker |
| 2,0 | bis | 2,8 | PUR-Verdicker |
| 2,8 | bis | 4,0 | Entschäumer |
| 0,1 | bis | 0,3 | Natronlauge |
| 23,0 | bis | 37,0 | Bindemittel |
| 0,2 | bis | 0,6 | Konservierungsmittel |
| 2,0 | bis | 20,0 | Effektpigment |
| 2,0 | bis | 35,0 | Cellulosefasern/Füllstoff |
| 1,5 | bis | 2,5 | Wachs |

Das erfindungsgemäße Beschichtungs- oder Anstrichmittel läßt sich vorteilhafterweise ohne vorherige Spezialgrundierung des Untergrundes auftragen. Darüber hinaus ist ein mehrschichtiges Auftrages des erfindungsgemäßen Beschichtungs- oder Anstrichmittels möglich, wodurch unterschiedliche, kleinflächigere Effekte erzielt werden können.

Gegenüber den aus dem Stand der Technik bekannten Antikeffektbeschichtungen zeigt das erfindungsgemäße Beschichtungs- oder Anstrichmittel eine erhöhte Widerstandsfähigkeit der Oberfläche gegenüber mechanischen Belastungen.

Vorteilhafterweise ist das erfindungsgemäße Beschichtungs- oder Anstrichmittel frei von Weichmachern und Lösemitteln und genügt den Voraussetzungen zur Zertifizierung mit Umweltgütezeichen wie beispielsweise dem "blauen Engel".

In einer weiteren. Ausgestaltung des erfindungsgemäßen Beschichtungs- oder Anstrichmittels ist eine Kombination von Stuckeffekt und Farbwechseleffekten durch Zugabe von Interferenzpigmenten und Einfärbung mit Farbpigmenten möglich. Hierdurch werden zusätzliche Farbnuancen in den erzeugten Oberflächen hervorgerufen, die vom jeweiligen Betrachtungswinkel abhängig sein können.

Das erfindungsgemäße Beschichtungs- oder Anstrichmittel läßt sich mittels einer Kurzflorwalze oder anderen geeigneten Auftragungsmitteln oder auch mit Federspachtelwerkzeugen auftragen und strukturieren, wodurch eine einfach Applikation des Beschichtungs- oder Anstrichmittels möglich ist. Hierdurch wird die Verarbeitbarkeit auch im do-it-yourself-Bereich gewährleistet. Alternativ läßt sich das erfindungsgemäße Beschichtungs- oder Anstrichmittel auch mittels eines feinporigen Schwammes auftragen, wodurch ein samtartiger Effekt auf der Oberfläche hervorgerufen wird. Der hierbei erzeugte Gesamteffekt ist von der Bewegungsrichtung und der Charakteristik des Werkzeugs abhängig.

Das erfindungsgemäße Beschichtungs- oder Anstrichmittel kann beispielsweise wie folgt aufgetragen werden:
A) Applizieren des Materials durch einfaches, gleichmäßiges Aufrollen auf die zu beschichtende Oberfläche. Hierbei sind keine besonderen Anforderungen notwendig.
B) Erzeugen des Effektes durch Ausrichten der Effektpigmente: Mit geeignetem Werkzeug wird der nasse bzw. schon fast trockene Anstrich mit sanften Bewegungen in unterschiedliche Richtungen bewegt. Schon hier ist im Nasszustand ein optischer Eindruck des Ergebnisses klar erkennbar. Dies erlaubt insbesondere dem ungeübten do-it-yourself-Anwender sofort zu erkennen, ob er überlappende großflächige Effektstellen erzeugt hat oder mehr kleinflächige, unruhigere Strukturen. Auch die Ansatzstellen bei Spachtelungen (Grate) verschwinden beim Trocknen fast völlig. Es sind keinerlei Zusatzarbeiten wie Schleifen oder mehrschichtiges Auftragen notwendig. Die möglichen m²/Std. sind hoch und machen das erfindungsgemäße Anstrich- oder Beschichtungsmittel auch für den professionellen Anwender interessant.

## Patentansprüche

1. Beschichtungsmittel, insbesondere Anstrichmittel, wenigstens aufweisend ein Effektpigment, insbesondere ein Perlglanzpigment, und Cellulosefasern.

2. Beschichtungsmittel gemäß Anspruch 1, wobei das Beschichtungsmittel aus einer bindemittelhaltigen Base und einem Effektmittel hergestellt ist, **dadurch gekennzeichnet, daß** das Effektmittel ein Effektpigment, insbesondere ein Perlglanzpigment und Cellulosefasern aufweist.

3. Beschichtungsmittel nach Anspruch 2, **dadurch gekennzeichnet, daß** das Effektmittel als Effektpigment Aluminium und/oder ein Interferenzpigment und/oder ein Perlglanzpigment aufweist.

4. Beschichtungsmittel nach einem oder mehreren der Ansprüche 2 und 3, **dadurch gekennzeichnet, daß** die Base als Bindemittel ein Polyvinylacetat aufweist.

5. Beschichtungsmittel nach einem oder mehreren der Ansprüche 2 bis 4, aufweisend die folgenden Bestandteile in Gew.-%
| | | | |
|---|---|---|---|
| 33,0 | bis | 50,0 | Wasser |
| 0,4 | bis | 0,6 | Netzmittel |
| 0,7 | bis | 1,1 | Verdicker |
| 2,0 | bis | 2,8 | PUR-Verdicker |
| 2,8 | bis | 4,0 | Entschäumer |
| 0,1 | bis | 0,3 | Natronlauge |
| 23,0 | bis | 37,0 | Bindemittel |
| 0,2 | bis | 0,6 | Konservierungsmittel |
| 2,0 | bis | 20,0 | Effektpigment |
| 2,0 | bis | 35,0 | Cellulosefasern/Füllstoff |
| 1,5 | bis | 2,5 | Wachs |

6. Beschichtungsmittel nach einem der mehreren der vorhergehenden Ansprüche, **dadurch gekennzeichnet, daß** die Cellulosefasern wenigstens teilweise durch wenigstens eine Substanz der Gruppe bestehend aus Talk, Kaolin, Schwerspat, Calciumcarbonat, Plastorit, Glimmer, Feldspat, Cristobalit, Microspheres, Glasbubbles, keramische Füllstoffe, Aerosile, Fällungskieselsäure oder Diatomeenerde ersetzt ist.

7. Beschichtungsmittel nach einem oder mehreren der Ansprüche 4 bis 6, **dadurch gekennzeichnet, daß** das in der Base als Bindemittel enthaltene Polyvinylacetat wenigstens teilweise durch wenigstens eine Substanz der Gruppe bestehend aus PVAC-Versatat, PVAC-Maleat, PVAC-Acrylat, PVAC-Versatat-Acrylat, Styrol-Butadiene, Styrol-Acrylate oder Reinacrylate ersetzt ist.
